# EUROPEAN PATENT SPECIFICATION

(11) **EP 0 511 351 B1**
(45) Date of publication and mention of the grant of the patent: **20.09.1995**
(21) Application number: 91919991.9
(22) Date of filing: 14.11.1991
(51) Int. Cl.: F16C 1/20

(54) **CABLE FOR ACCURATE TRANSMISSION OF LONGITUDINAL MOTION**
KABEL ZUR GENAUEN ÜBERTRAGUNG VON LÄNGSBEWEGUNG
CABLE DE TRANSMISSION DE MOUVEMENT LONGITUDINAL DE PRECISION

(30) Priority: 19.11.1990 ES 9002923
(43) Date of publication of application: 04.11.1992
(73) Proprietor: FICO-CABLES, S.A., E-08191 Rubi (ES)
(72) Inventor: GABAS CEBOLLERO, Carlos, E-08024 Barcelona (ES); ROCA CABESTANY, Agustin, E-08191 Rubi (ES)
(74) Representative: Schwabe - Sandmair - Marx
(86) International application number: PCT/ES91/00077
(87) International publication number: WO 92/08904

(56) References cited:
- DE-A- 2 404 005
- DE-B- 1 129 780
- DE-C- 610 080
- FR-A- 1 316 185
- FR-A- 2 112 703
- FR-A- 2 190 203

## Description

### Field of the Invention

The object of the present invention is a precision longitudinal movement transmission cable which is particularly applicable as a connecting member between the control lever and the automatic gearbox of motor vehicles.

### Background of the Invention

It is well known that in motor vehicles fitted with an automatic gearbox as original equipment the connection between the gear lever mounted in the vehicle interior and the said automatic gearbox is effected by a longitudinal movement transmission cable, unlike vehicles provided as original equipment with a manual gearbox in which the connection between the gear lever and the gearbox is effected generally by a set of articulated rigid metal rods.

The purpose of the said longitudinal movement transmission cables is to transfer to the automatic gearbox the movements that the driver applies to the gear lever. The flexible nature of these transmission cables is determinative for their use as a connecting member between the said gear lever and automatic gearbox in view of the relative positions of both, generally involving an undulating path for the connection.

Generally speaking, these longitudinal movement transmission cables are basically formed by a longitudinal central band or core housed in a casing adapted to the operational conditions of the cable. The central core may slide relative to the casing with the aid of bearings.

Among the known longitudinal movement transmission cables incorporating the novel features characterizing them which have been described in essence in the foregoing paragraphs, the following may be cited: French patent 70.39958, "Perfectionnements aux transmissions à va-et-vient", describing a longitudinal movement transmission cable wherein the central core consists of a continuous prismatic band longitudinally movable between two opposed rows of running members which respectively bear against a guide channel attached to the cable casing; French patent 73.15135, "Télécommande mécanique", describes a longitudinal movement transmission cable comprising a longitudinally movable central prismatic core, two of the sides whereof bear on continuous bands provided with running members which bear against the inner surface of the cable casing; and Spanish patent 308,365, "Un dispositivo de cable de empuje y tracción", which describes a longitudinal movement transmission cable having a cylindrical central core longitudinally movable on running members housed in a plurality of interconnected supports concentric to the main core.

German patent DE-B-1 129 780 discloses a bendable tension and pressure transmitting cable. The central core slides relative to the casing with the aid of balls. The balls rolling in grooves of the central core are separated by each other by means of bent wires. These bent wires move with the balls, the wire may slide along the grooves and/or the inner surface of the casing, thereby causing additional friction force. Furthermore the longitudinal movement of the core relative to the casing is not limited.

French patent FR-A-1 316 185 discloses a cable with ball bearings between the core and the casing. The balls of the bearing are fitted in holes of short tubular casings, which surround the central core. By means of this tubular casings a limited longitudinal movement of the core relative to the casing is possible. But there are a plurality of tubular casings necessary to allow a bending of the cable. This makes the assembling of the cable rather complex and expensive.

Generally speaking, the known embodiments of longitudinal movement transmission cables suffer as main drawback the fact that they comprise a high number of component parts which are complex to make and assemble. On the one hand, all of this makes production and assembly costs more expensive and, on the other hand, is relatively frequently the cause of breakdowns and/or faulty operation of the cable.

### Summary of the Invention

It is an object of the invention to provide a new embodiment of longitudinal movement transmission cable affording, over the known embodiments, a smaller number of components which are easy to make and assemble, as well as a high degree of operational reliability.

Another object of the invention is to provide a cable with a pre-defined maximum distance over which the core may be moved longitudinally relative to the casing. If this maximum distance is achieved the frictional force between the core and the casing should enhance significantly.

To obtain this the precision longitudinal movement transmission cable with a tubular casing of the invention has
- an essentially cylindrical central core (N) of the same length as the tubular casing (T) containing it and which is provided with a central axial reinforcement constituted by a metal cable (4), said central core (N) being formed with a sufficient number of radial projections (5), at least three, extending longitudinally without a break over the whole length of said central core (N), said radial projections (5) defining corresponding equidistant channel-like grooves (6), the theoretical outside diamenter given by the free ends of said radial extensions (5) being smaller than the inside diameter of the tubular casing (T), so that the central core (N) may slide and rotate about its own axis inside said tubular casing (T);
- balls (10) in the channel-like grooves (6) which, when the central core (N) is housed in the tubular casing (T), may snugly move along the inner surface of the tubular casing (T) and along the surface of the channel-like groove (6) of the central core (N) containing it, when the central core is moved longitudinally in any direction;
comprising in each of said channel-like grooves (6) retaining means on the central core in the style of partition walls positionally fixed relative to the central core, said retaining means defining a plurality of compartments (9) of equal length for each of said balls in longitudinal alignment along said grooves (6), which length corresponds to the maximum length along which each of said balls may roll and which length thus defines the maximum operation length over which the central core may be longitudinally moved relative to the tubular casing.

It is also a feature of the precision longitudinal movement transmission cable of the invention that the retaining means on the central core consists of a metal wire uniformly helically wound about the whole length of said central core. This winding is housed in grooves which, angularly mating with said helical winding, are formed on the free ends of the radial projections of the central core, such that the metal wire defines in the channel-like grooves longitudinally adjacent compartments of like length.

The small number of components of the precision longitudinal movement transmission cable of the invention in comparison with the known embodiments, as well as the simplicity of manufacture and assembly of these components are fundamental factors in the reduction of production costs.

The cable of the invention also offers, because of its characteristic structure, a very high reliability and accuracy of operation, as well as a minimum wear of the constituent parts thereof which, under normal conditions of use, ensures a very high number of operations or movements of the central core relative to the casing in its reciprocating movements.

The tubular casing is, under normal conditions of use, attached at the respective ends thereof by corresponding connection terminals to the automatic gearbox change lever and to the corresponding gearbox mechanism.

The maximum length over which the central core may be longitudinally moved relative to the tubular casing of the precision longitudinal movement transmission cable of the invention is defined precisely by the retaining means of the central core and, in particular, by the length of the compartments said retaining means define in each of the channel-like grooves of the central core.

As described above, each ball housed in its corresponding compartment of the central core may roll simultaneously along the inner surface of the tubular casing and along the surface of the corresponding channel-like groove of the central core to the extent defined by the length of said compartments when a force sufficient to move the central core relative to the casing is applied to one of the ends thereof. When the ball reaches the retaining means defining said compartment in either of the two possible directions of movement of the central core and the said force is held applied to one of the ends thereof, said ball may not continue rolling and could only continue moving by sliding and rubbing against the said surfaces. By extension, this friction occurs all along the cable at the plurality of balls housed in their respective compartments defining the said retaining means in the central core of the cable of the invention which means that, as from the time when the movement of the central core relative to the casing is such that the balls housed in the compartments of the said central core terminate the rolling path, overall they oppose to the movement such a high resistance that it is necessary to use a very high force for such central core to continue moving.

In the light of the foregoing, the precision longitudinal movement transmission cable of the invention may, on the one hand, transmit the longitudinal movement under the conditions described above and, on the other hand, it may limit such longitudinal movement, adapting it to the needs of each particular application, thereby preventing the mechanisms and/or devices receiving such longitudinal movement or, which is the same, receiving the traction and compression forces, from being exposed to mechanical overloads which frequently cause breakdowns and/or misfunctioning of said mechanisms and/or devices.

### Brief Description of the Drawings

In the sheet of drawings accompanying the present description there is shown the precision longitudinal movement transmission cable of the invention. In the drawings:
Figure 1 is a view, partly in cross section, of the movement transmission cable of the invention.
Figure 2 is a cross section view on the line II-II of Figure 1.

### Detailed Description of the Embodiment

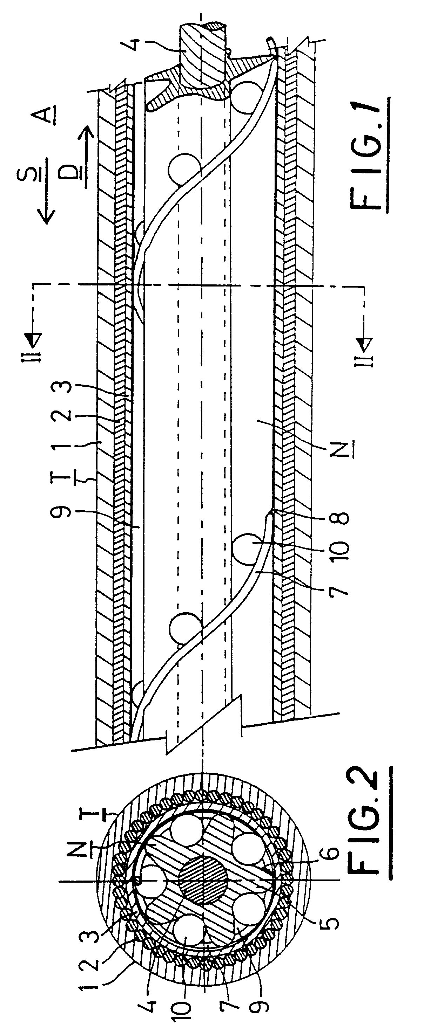

The precision longitudinal movement transmission cable of the invention described as an embodiment is composed, as shown in cross section in Figure 2 of the drawing sheet, by the central core N and the tubular casing T containing it.

In this embodiment, the precision longitudinal movement transmission cable of the invention is, as said above, for connecting the gear lever arranged in the passenger compartment of the vehicle with the automatic gearbox. To this end, the transmission cable is provided at both ends with corresponding connection terminals which, for greater clarity, have not been shown in the drawing sheet.

Figures 1 and 2 show how the tubular casing T is composed, in this embodiment of the precision longitudinal movement transmission cable of the invention, of the outer protective sheath, by a plurality of reinforcing cables 2 and by the inner running sheath 3.

The outer protective sheath 1 and the inner running sheath 3 are preferably made of plastics materials of properties appropriate for their respective purposes.

The cables 2, as shown in detail in Figure 2, are arranged between the said outer protective sheath 1 and the inner running sheath 3, being concentrically wound around the inner sheath 3 and extending all along the tubular casing T. Said cables 2 are metallic and act as structural reinforcement for the casing T.

All the foregoing concerning the tubular casing T is well known and said tubular casing T may have any other composition and structure appropriate for the needs of each particular application of the precision longitudinal movement transmission cable of the invention, the detailed description given above being only for the purpose of one example of embodiment.

Figure 1 shows how the central core N is coextensive with the tubular casing T. The central core N is provided with a central axial reinforcement comprising the metal cable 4 coextensive with the central core N.

Figure 2 shows how the central core N is essentially cylindrical and is formed with the identical equidistant radial projections 5 of which, in this embodiment, there are five. The number of radial projections 5 may vary depending on the needs of each particular application. It should be noted that the minimum number of axial projections 5 with which adequate working of the precision longitudinal movement transmission cable of the invention is obtained is three.

The radial projections 5 extend continuously along the central core N and have an essentially trapezial section, with the shorter ends thereof arranged at the free ends of said radial projections, such as shown in Figure 2.

Figure 2 shows how the radial projections 5 are dimensioned in such a way as to define the curved profile channel-like grooves 6 which, like the radial projections 5, are coextensive in this embodiment with the central core N as shown in Figure 1. Logically, the number of channel-like grooves 6 is the same as the number of radial projections 5.

The free ends of the radial projections 5 define, as shown in Figure 2, the theoretical outside diameter of the central core N. This diameter, which is smaller than the inside diameter of the running sheath 3 of the tubular casing T, allows the central core N to slide longitudinally and rotate about itself snugly relative to said tubular casing T.

Figures 1 and 2 show how the metal wire 7 is uniformly helically wound around the central core N. This wire is positionally fixed relative to the central core N by the action of the transverse grooves 8 which, forming the same angle relative to the centre axis of the central core N as defined by the helical winding of the metal wire 7, are formed in the free ends of the radial projections 5 of said central core N.

The transverse grooves 8 are dimensioned in such a way as snugly to contain the portions of the metal wire 7 crossing therethrough. In this way, the metal wire 7 does not project outwardly relative to the central core N, as shown in Figures 1 and 2.

Figure 1 shows how the metal wire 7 helically wound around the central core N, defines in the channel-like grooves 6, the longitudinal compartments 9 which are of equal length and transversely adjacent along the central core N. These compartments 9 are thus longitudinally bounded by the portions of metal wire 7 angularly arranged across them and transversely by the radial projections 5 of the central core N.

In each of the compartments 9, as shown in Figure 1, there is housed a preferably metallic, and to be more precise, a steel ball 10, the diameter of which allows said ball 10 simultaneously to roll along the inner surface of the running sheath 3 of the tubular casing T and roll over the surface of the channel-like groove 6 of the central core N when the central core N is in the tubular casing T and is moved longitudinally relative thereto.

When the precision longitudinal movement transmission cable of the invention is fixed at both ends thereof, by corresponding connection terminals, respectively to the gear lever and to the automatic gearbox, it works as follows:
- Figure 1 shows the position occupied by the central core N relative to the tubular casing T when no force is being applied to said central core N. Under these conditions, the balls 10, housed in their respective compartments 9, occupy the position shown in Figure 1, i.e. touching the metal wire 7 which, as said above, longitudinally bounds the ends of each of the compartments 9, the balls 10 being retained in this position by the snug fit with which they are housed in their respective compartments 9, under normal conditions of use of the cable of the invention;
- when a sufficient force is applied to the end A of the central core N in the direction S in Figure 1, the central core N is moved longitudinally of the tubular casing T in said direction S bearing on the balls 10 which roll simultaneously on the inner surface of the running sheath 3 of the tubular casing T and on the inner surface of the channel-like grooves 6 of the central core N whereby the longitudinal movement of the central core N relative to the tubular casing T is sufficiently approximate to twice the longitudinal movement of the balls 10;
- when the balls 10 reach the opposite end of their respective compartments 9, if the said force is maintained on the end A of the central core N in the direction marked as S, said balls 10 are prevented from continuing to roll by the metal wire 7, so that they may only continue moving by sliding and rubbing against the said surfaces, i.e. the inner surface of the running sheath 3 and the surface of the channel-like grooves 6;
- therefore, the joint friction produced under the conditions described immediately above by the plurality of balls 10 housed in their respective compartments 9 of the central core N prevents the central core N from continuing to move longitudinally under normal conditions of use, and in order to obtain continued longitudinal movement of the central core N, it is necessary to apply a much great force than initially applied to the end A thereof. In this way, as said above, the joint action of the metal wire 7 and of the balls 10 effectively mark the limits of the maximum distance over which the central core N may be moved longitudinally relative to the tubular casing T;
- the return of the central core N to the previously described initial position requires a force of sufficient magnitude to be applied in the opposite direction, marked D in Figure 1, to S to the said end A whereby the central core N will be moved in said direction D until the balls 10 reach the position shown in Figure 1 where the process described in the foregoing paragraphs will be repeated.

## Claims

1. A precision longitudinal movement transmission cable having a tubular casing (T) and comprising:
- an essentially cylindrical central core (N) of the same length as the tubular casing (T) containing it and which is provided with a central axial reinforcement constituted by a metal cable (4), said central core (N) being formed with a sufficient number of radial projections (5), at least three, extending longitudinally without a break over the whole length of said central core (N), said radial projections (5) defining corresponding equidistant channel-like grooves (6), the theoretical outside diamenter given by the free ends of said radial extensions (5) being smaller than the inside diameter of the tubular casing (T), so that the central core (N) may slide and rotate about its own axis inside said tubular casing (T);
- balls(10) in the channel-like grooves (6) which, when the central core (N) is housed in the tubular casing (T), may snugly move along the inner surface of the tubular casing (T) and along the surface of the channel-like groove (6) of the central core (N) containing it, when the central core is moved longitudinally in any direction;
**characterized** by comprising in each of said channel-like grooves (6) retaining means on the central core in the style of partition walls positionally fixed relative to the central core, said retaining means defining a plurality of compartments (9) of equal length for each of said balls in longitudinal alignment along said grooves (6), which length corresponds to the maximum length along which each of said balls may roll and which length thus defines the maximum operation length over which the central core may be longitudinally moved relative to the tubular casing.

2. The precision longitudinal movement transmission cable of claim 1, characterised in that the retaining means on the central core (N) consists of a metal wire (7) uniformly helically wound about the whole length of said central core (N), said winding being housed in grooves (8) which, angularly mating with said helical winding, are formed on the free ends of the radial projections (5) of the central core (N), such that the metal wire (7) defines in the channel-like grooves (6) longitudinally adjacent compartments (9) of like length.

## Patentansprüche

1. Präzisionsseil zur Übertragung einer Längsbewegung bzw. Längsverschiebung mit einem röhrenförmigen Gehäuse (T), und das folgendes aufweist:
- einen im wesentlichen zylindrischen zentralen Kern (N), der dieselbe Länge aufweist, wie das röhrenförmige Gehäuse (T), das diesen enthält, und der mit einer zentralen axialen Verstärkung versehen ist, die durch ein Metallseil (4) gebildet wird, wobei der zentrale Kern (N) mit einer ausreichenden Anzahl, wenigstens drei, an radialen Fortsätzen (5) ausgebildet wird, die sich in Längserstreckungsrichtung ohne Unterbrechung über die gesamte lange des zentralen Kerns (N) erstrecken, wobei die radialen Fortsätze (5) entsprechende äquidistante, kanalähnliche Rillen (6) festlegen, wobei der theoretische Außendurchmesser, der durch die freien Enden der radialen Erstreckungen (5) gegeben ist, kleiner ist, als der Innendurchmesser des röhrenförmigen Gehäuses (T), so daß der zentrale Kern (N) um seine eigene Achse innerhalb des röhrenförmigen Gehäuses (T) gleiten und sich drehen kann;
- Kugeln (10) in den kanalähnlichen Rillen (6), die sich, wenn der zentrale Kern (N), in dem röhrenförmigen Gehäuse (T) aufgenommen bzw. untergebracht ist, satt anliegend bzw. paßgenau entlang der inneren Fläche des röhrenförmigen Gehäuses (T) und entlang der Oberfläche der kanalähnlichen Rille (6) des zentralen Kerns (N), die diese enthält, bewegen können, wenn der zentrale Kern in Längserstreckungsrichtung in irgendeine Richtung bewegt wird;
**dadurch gekennzeichnet, daß** in jeder seiner kanalähnlichen Rillen (6) Haltemittel auf dem zentralen Kern in der Art von Trennwänden bzw. abteilungenbildenden Wänden aufweist, die bzgl. ihrer Lage relativ zu dem zentralen Kern festgelegt bzw. befestigt sind, wobei die Haltemittel eine Anzahl gleichlanger Abteilungen (9) für jede der Kugeln in Längsausrichtung entlang der Rillen (6) festlegen, wobei diese Länge der maximalen Länge entspricht, entlang der jede der Kugeln rollen kann, und diese Länge somit die maximale Betätigungslänge festlegt, über die der zentrale Kern in Längserstreckungsrichtung relativ zu dem röhrenförmigen Gehäuse bewegt werden kann.

2. Präzisionsseil zur Übertragung einer Längsbewegung nach Anspruch 1, dadurch gekennzeichnet, daß die Haltemittel des zentralen Kerns (N) aus einem Metalldraht (7) bestehen, der gleichmäßig schraubenförmig um die gesamte Länge des zentralen Kerns (N) gewickelt bzw. gewunden ist, wobei die Wicklung in Rillen (8) aufgenommen ist, die winklig bzw. schräg mit der helikalen Wicklung zusammenpassen und an den freien Enden der radialen Fortsätze bzw. Erstreckungen (5) des zentralen Kerns (N) ausgebildet sind, so daß der Metalldraht (7) in den kanalähnlichen Rillen (6) in Längserstreckungsrichtung benachbarte Abteilungen (9) gleicher Länge festlegt.

## Revendications

1. Câble de transmission à mouvement longitudinal précis, muni d'une enveloppe tubulaire (T), et comprenant :
- une âme centrale essentiellement cylindrique (N), de même longueur que l'enveloppe tubulaire (T) qui la renferme, et pourvue d'un renforcement axial central constitué d'un câble métallique (4), ladite âme centrale (N) présentant un nombre suffisant de saillies radiales (5), au moins trois, s'étendant, sans discontinuité, dans le sens longitudinal, sur toute la longueur de ladite âme centrale (N), lesdites saillies radiales (5) définissant des rainures (6) équidistantes correspondantes, du genre canal, le diamètre extérieur théorique, donné par les extrémités libres des saillies radiales précitées (5), étant plus petit que le diamètre intérieur de l'enveloppe tubulaire (T), de sorte que l'âme centrale (N) peut coulisser et tourner, sur son axe propre, à l'intérieur de l'enveloppe tubulaire précitée (T) ;
- des billes (10) logées dans les rainures (6) du genre canal, et qui, lorsque l'âme centrale (N) est installée dans l'enveloppe tubulaire (T), peuvent se déplacer de façon bien ajustée sur et le long de la surface intérieure de l'enveloppe tubulaire (T) et sur et le long de la surface de la rainure (6), du genre canal, de l'âme centrale (N), dans laquelle elles se trouvent logées, lorsque ladite âme centrale est déplacée longitudinalement, dans l'une ou l'autre direction ;
caractérisé en ce qu'il comprend, dans chacune desdites rainures (6) du genre canal, des moyens de retenue sur l'âme centrale, dans le genre de cloisons fixes, positionnés par rapport à l'âme centrale, les moyens de retenue précités définissant une pluralité de compartiments (9) de longueur égale pour chacune desdites billes, alignés dans le sens longitudinal le long desdites rainures (6), cette longueur correspondant à la longueur maximum sur laquelle chacune desdites billes peut rouler, et définissant donc la longueur d'actionnement maximum sur laquelle l'âme centre le peut se déplacer en sens longitudinal par rapport à l'enveloppe tubulaire.

2. Câble de transmission à mouvement longitudinal précis selon la revendication 1, caractérisé en ce que le moyen de retenue ménagé sur l'âme centrale (N) est constitué par un fil métallique (7) enroulé uniformément en hélice sur toute la longueur de l'âme centrale (N), cet enroulement étant logé dans des rainures (8) prévues sur les extrémités libres des saillies radiales (5) de l'âme centale (N), de telle sorte que le fils métallique (7) est accouplé, angulairement auxdites saillies et définit, dans les rainures (6) du genre canal, des compartiments (9) longitudinalement adjacents et de même longueur.
